# EUROPEAN PATENT SPECIFICATION

(11) **EP 1 940 120 B1**
(45) Date of publication and mention of the grant of the patent: **14.04.2010**
(21) Application number: 07380348.8
(22) Date of filing: 12.12.2007
(51) Int. Cl.: H04L 29/06, G06Q 30/00

(54) **Method and system for providing personalized advertisements to users of electronic communications devices**
Verfahren und System zum Bereitstellen personalisierter Werbung für Benutzer von elektronischen Kommunikationsgeräten
Procédé et système pour fournir des publicités personnalisées aux utilisateurs de dispositifs de communications électroniques

(30) Priority: 28.12.2006 ES 200603301
(43) Date of publication of application: 02.07.2008
(73) Proprietor: Vodafone Group PLC, Newbury Berkshire RG14 2FN (GB); Vodafone Espana, S.A., 28108 Alcobendas, Madrid (ES)
(72) Inventor: Carvajal Y Urquijo, Isabel c/o Clarke, Modet & Co., 28001 - Madrid (ES); Almenar Belenguer, Pedro, 28037 - Madrid (ES)
(74) Representative: Carvajal y Urquijo, Isabel

(56) References cited:
- US-A1- 2002 091 568
- US-B1- 6 385 592
- US-B1- 6 807 574

## Description

### Field of the Invention

The present invention is comprised within the field of personalized advertising in media such as mobile telephony or Internet. Specifically, an environment is formed with the present invention which is easy to integrate in any information service and provides personalized advertisements to the user, based on a user profile and on a previously authenticated user identity.

### Background of the Invention

Virtually 100% of the advertisements shown in magazines, Internet and other media are carried out without directly assuring that the person receiving said advertisements is a potential consumer thereof, which causes situations such as the male public being bombarded with female perfume advertisements, the female public with shaver advertisements etc., wasting part of the money invested in said advertisements. The main reason this is done is because it is very difficult to know the profile of the client receiving said advertisements, so they cannot be adapted to the tastes and needs of the receiving client.

The alternative approach normally used in these cases is to attempt guessing the profile of the client by the type content in which the advertisements are inserted. Thus, it is more likely for a woman to read a magazine aimed at the female public than a man, therefore it will be more common to see advertisements typically aimed at the female public in these magazines than in others aimed at the male public. Nevertheless, this does not prevent that there are occasionally consumers of a certain content who do not correspond to the profile imagined by the advertisers.

There are currently already several tools which can assign advertisements according to the profile of the subscriber ('Advertisement adapters'), such as Ad Infuse or Rhythm NewMedia, for example. Specifically, they can:
o Based on the local identity (or identity in the operator) of the client, find out the profile by consulting a profile database.
o Based on the profile, select the advertisement that is suitable for different content formats.

Said tools are already being used to insert advertisements in some types of contents, such as wap page, audio and video streaming. Nevertheless, in all these cases the content provider does not have client identity information; only the tool has such information. Consequently, the tool itself inserts advertisements in the content of the provider in real time, intercepting the client requests to the content provider (e.g. intercepting the client http requests, in the web or wap case) and, given that it has the identity of the client, altering the replies with personalized advertisements. This process for inserting advertisements is not scalable, i.e., it cannot assure that advertisements can be provided to as many content providers and users as desired, because the process for inserting advertisements in real time is usually very expensive in terms of resources (especially hardware).

Such an advertisement system is disclosed in document US 6 385 592.

In the present invention, the content provider is provided with certain client identity information, from which it obtains the personalized advertisement. The provider itself is then in charge of inserting it in its own medium.

There are also currently tools for inserting advertisements in web pages of third-party providers, such as Google AdSense®, which normally does not use client information, but only information of the web page visited by the client. Nevertheless, for the cases in which Google® has and uses the client identity information and profile, the difference with the present invention lies in, in the case of Google AdSense® :
o the insertion of the advertisements in the visited page is carried out by the browser of the user or subscriber, and not by the provider of the page in which such advertisements are inserted, which never has access to the inserted advertisements (the provider only includes in its pages a link to the advertisements that Google® selects in real time and accordingly sends to the browser of the user). This Google® model is therefore not valid for non-web contents (e.g. videostreaming), in the which the advertisements must be inserted in the content before displaying the latter to the client.
o Only Google®, not the content provider, has the subscriber identity information. The content provider never has any subscriber identifier (unless the subscriber himself or herself provides it).

There are also currently identity management environments, such as Liberty, and in fact, there are already commercial implementations. Said environments allow providing to content providers subscriber identifiers which can be used to request additional information about the subscriber, generally age, sex, address, etc. Nevertheless, providing personalized advertisements through them has not been considered, because personalized advertisements further depend on the medium to which the content provider belongs (web page provider, TV provider, etc.). In addition, these environments are only valid when the communication protocol is http, which does not have to be the case of the invention described herein.

Therefore, given that the problem lies in adapting the advertisements to the profile of the specific client who is receiving them, a solution is proposed consisting of developing an environment which allows:
- Providing the content provider with any client identifier.
- Presenting an interface allowing the content provider to request personalized advertisements for said client:
   o Based on the identity and profile thereof (which profile will never be known by the provider).
   o Based on the specific context of the subscriber (time, location, etc).
   o Based on the nature of the content in question which is being offered by the provider (video, audio, web page, etc.).
   o Based on the actual content (financial news, games, etc.).

The object is to provide advertisements adapted to the medium whereby a content provider interacts with a client, said advertisements being personalized for the profile of the client interacting with the content provider.

### Description of the Invention

The invention relates to a method, in its two alternative solutions, and to a system for providing personalized advertisements to users of electronic communications devices according to claim 1 and 8 for the alternative solutions of the method and according to claim 15 for the system. Preferred embodiments of the method and of the system are defined in the dependent claims.

The method object of the invention is useful for providing personalized advertisements to users of electronic communications devices, with access to a content provider, when the user accesses said provider to request a content. The method comprises the following steps:
- Requesting, by the service provider, the identification and authentication of said user from an identity manager.
- Authentication of the user, carried out by the identity manager. Said authentication can be carried out in the following steps:
   - requesting, by the identity manager, authentication from the electronic communications device of said user;
   - the electronic communications device is authenticated for the identity manager.
- Sending, by the identity manager, a user identifier to the content provider. The address of the advertisement adaptation service or the address of a service discovery service in which the content provider can find the address of the advertisement adaptation service can be attached to this sending.
- Requesting, by the content provider, at least one advertisement from an advertisement adaptation service, sending with said request the user identifier and parameters relating to the content and type of advertisement requested. Said parameters can be at least one of the following: the format in which the advertisement is to be received, the nature of the content in which the advertisement will be inserted and the instructions to be applied to choose the advertisement.
- Requesting, by the advertisement adaptation service, from the identity manager a translation of the user identifier to a new identifier which can be used in a user profile database in which the user profiles are stored.
- Sending, by the identity manager, the new user identifier to the advertisement adaptation service.
- Requesting, by the advertisement adaptation service and using the new identifier, the user profile from the user profile database.
- Sending, by the user profile database, said user profile to the advertisement adaptation service.
- Consulting, by the advertisement adaptation service, an advertisement database to determine the advertisement that is most suitable for the user profile and for the parameters relating to the content and type of advertisement requested by the content provider, requesting from said database the at least one selected advertisement.
- Sending, by the advertisement database, the at least one selected advertisement and optionally metadata associated to said advertisement to the advertisement adaptation service.
- Sending, by the advertisement adaptation service, the at least one selected advertisement and the metadata associated thereto, if any, to the content provider. A register which is stored in a database can be generated with said sending.
- Inserting, by the content provider, the selected advertisement in the content requested by the user and according to the indications included in the metadata, if any.

Any communication set up between the content provider and the advertisement adaptation service can be carried out through a communication interface.

There is another alternative method as claimed in claim 8. Said method only differs from the already described method in that when the user accesses the content provider, the latter receives the identification of the user in the same request. To that end, the user must have previously been authenticated for the identity manager. From this point, the rest of the steps of this second alternative method coincide with the steps of the first described method.

A system for providing personalized advertisements to users of electronic communications devices, with access to a content provider, when the user accesses said provider to request a content is also an object of the present invention. The system comprises:
- an identity manager which, based on a user authentication request by the content provider, authenticates said user and sends a user identifier to said content provider;
- an advertisement adaptation system in charge of:
   - receiving a request from the content provider to obtain at least one advertisement that is suitable for the user profile and for parameters relating to the content and type of advertisement requested, the advertisement adaptation system returning the at least one selected advertisement to said content provider; and
   - requesting from the identity manager a conversion of the user identifier to a new identifier suitable for being used in a user profile database;
- a user profile database in which the user profiles of the system are stored and which is accessed by the advertisement adaptation system to obtain said profile;
- an advertisement database, including therein the user profiles which said advertisements are aimed at and other metadata associated to said advertisements, which database is accessed by the advertisement adaptation system to obtain the advertisement.

The system can additionally comprise a communication interface through which the communication between the content provider and the advertisement adaptation service is carried out. It can also additionally have a database in which the registers generated in each advertisement request by each content provider are stored.

### Brief Description of the Drawings

A series of drawings is very briefly described below which aid in better understanding the invention and are expressly related to an embodiment of said invention which is set forth as a non-limiting example thereof.

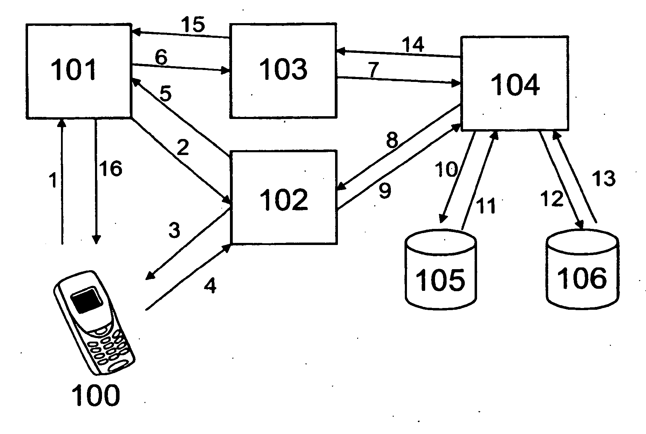

Figure 1 shows a diagram with the components of the system and the different steps of the method object of the invention.

### Description of a Preferred Embodiment of the Invention

The invention consists of a method and a system for providing personalized advertisements to users of electronic communications devices 100, with access to a content provider 101, when the user accesses said provider 101 to request a content.

As shown in Figure 1, the following are the key elements of the system object of the invention:
- An identity manager 102 which, based on a user identification request by a content provider 101, authenticates the user and provides a user identifier to said content provider 101.
- A communication interface 103 so that the content provider 101 can request and obtain a personalized advertisement according to the characteristics of the user and the content in which the advertisement will be inserted.
- An advertisement adaptation system 104 which allows collecting the request of the content provider 101 and, interacting with other elements of the system, returns the advertisement that is most suitable for the type of user and for the content to the interface 103.
- A user profile database 105.
- An advertisement database 106, with the user profiles which such advertisements are aimed at and metadata associated to the advertisements.

The following would be a normal operating flow of the system:
S1. The user accesses 1 the content provider 101, requesting a content. The content can be a wap, web page, an audio, video stream, a game or others.
S2. The content provider 101 requests 2 from an identity manager 102 to authenticate and identify the user. Said request can be direct or through some type of redirection of the session that the content provider has set up with the user (e.g. an http redirection in the case of web interaction).
S3. The identity manager 102 requests 3 from the user his or her authentication.
S4. The user is positively authenticated 4. Steps S3 and S4 can be omitted if the identity manager 102 has any means for finding out the user identity in a way that is transparent to it (e.g., because the identity manager belongs to the network operator giving the user access to the content). In the same way, steps S3 and S4 can occur before S1, such that the content provider 101 receives user identity information when such user accesses the provider 101 (i.e., identity information embedded in the S1 request itself of the user). Another alternative scenario would occur because the identity manager 102 were not able to authenticate the user, such that it would delegate said authentication to another additional identity manager. This delegation could be direct (i.e., the identity manager 102 acting as proxy between the user and the additional identity manager) or by means of redirection (i.e., redirecting the user session to the additional identity manager).
S5. The identity manager 102 returns 5 a user identifier to the content provider 101. This identifier can be both permanent (i.e., always the same for this user and this content provider 101) or temporary (for one or a few uses; only valid for requesting additional information about the user). The identity manager can likewise return additional information such as, for example, the address of the interface 103 through which the advertisement can be requested (step S6), the address of the advertisement adaptation service (104) or the address of a discovery service for discovering other services (allowing the content provider to find out the address of the interface 103). The sending of this information from the identity manager 102 towards the content provider 101 can be, as occurred in step S2, direct or through the redirection of the session with the user, sending such session back to the content provider.
S6. The content provider 101 requests 6 one or several advertisements, including in the request:
   - The identifier provided by the identity manager 102;
   and, for each requested advertisement:
   - the format in which each advertisement is to be received: still image, video, audio stream, etc, as well as the required coding (jpeg, gif for still images, h.264 for video, etc.);
   - data about the nature of the content in question in which the provider 101 will insert each advertisement;
   - information about the policies to be applied when choosing each advertisement (e.g., no sex, gambling advertisements, etc.);
S7. The request interface 103 sends 7 the request to the advertisement adaptation service 104.
S8. The advertisement adaptation service 104 requests 8 from the identity manager 102 a translation of the identifier to a new user identifier which can be used in the user profile database 105. (e.g. MSISDN).
S9. The identity manager 102 returns 9 to the advertisement adaptation service 104 said new user identifier.
S10. The advertisement adaptation service 104 requests 10 from the profile database 105 the user profile in question, using the new user identifier.
S11. The profile database 105 returns the user profile. The profile can include both demographic data (sex, age, address) and preferences (information entered by the user or extrapolated by other means).
S12. The advertisement adaptation service 104 consults 12 the advertisement database 106 to determine the advertisement (or the advertisements, if several have been requested) that is most suitable for that user profile, for the type of content and for the advertisement selection policies specified by the content provider 101 in its request. S13. The advertisement database 106 returns 13 the requested advertisement (or the advertisements, if several have been requested) to the advertisement adaptation service 104. Metadata about the advertisement (e.g., an address so that the subscriber can request more information about the advertisement, information to indicate how the advertisement should be inserted inside the original content, validity period of the advertisement -e.g. because the latter depends on the location of the user, which usually varies-, the address of several third-party providers which can insert the advertisement in the content if the provider does not know or cannot do so, etc.) can be included together with the advertisement.
S14. The advertisement adaptation service 104 returns 14 to the communication interface 103 the requested advertisement (or the advertisements, if there are several) together with the associated metadata, if any. In this step, the advertisement adaptation service 104 can generate any internal register which is stored in any database to, for example, charge the advertiser for the inserted advertisements, pay the content provider for having inserted the advertisements or feed the subscriber profile database with information of the inserted advertisements.
S15. The interface 103 sends the advertisement or advertisements and the metadata to the content provider 101.
S16. The content provider 101 will be in charge of inserting the advertisement or advertisements in the content requested by the user, according to the indications included in the metadata.

Steps S6 to S15 can be repeated as many times as necessary once the provider 101 has the user identifier.

The session between the content provider 101 and the user is by no means restricted to being through a mobile telephone. In the same way, it is not restricted to a specific protocol either (the protocol can be HTTP, RTSP, RTP or SIP, for example).

## Claims

1. A method for providing personalized advertisements to users of electronic communications devices (100), with access to a content provider (101), when the user accesses (1) said provider (101) to request a content, comprising the following steps:
- requesting (2), by the content provider (101), the identification and authentication of said user from an identity manager (102);
- authentication of the user, carried out by the identity manager (102);
- sending (5), by the identity manager (102), a user identifier to the content provider (101);
- requesting, by the content provider (101), at least one advertisement from an advertisement adaptation service (104), sending with said request the user identifier and parameters relating to the content and type of advertisement requested;
- requesting (8), by the advertisement adaptation service (104), from the identity manager (102) a translation of the user identifier to a new identifier which can be used in a user profile database (105) in which the user profiles are stored;
- sending (9), by the identity manager (102), the new user identifier to the advertisement adaptation service (104);
- requesting (10), by the advertisement adaptation service (104) and using the new identifier, the user profile from the user profile database (105);
- sending (11), by the user profile database (105), said user profile to the advertisement adaptation service (104);
- consulting (12), by the advertisement adaptation service (104), an advertisement database (106) to determine the advertisement that is most suitable for the user profile and for the parameters relating to the content and type of advertisement requested by the content provider (101), requesting from said database (106) the at least one selected advertisement;
- sending (13), by the advertisement database (106), the at least one selected advertisement and optionally metadata associated to said advertisement to the advertisement adaptation service (104);
- sending, by the advertisement adaptation service (104), the at least one selected advertisement and the metadata associated thereto, if any, to the content provider (101);
- inserting (16), by the content provider (101), the selected advertisement in the content requested by the user and according to the indications included in the metadata, if any.

2. A method according to claim 1, **characterized in that** the following steps are carried out for the authentication of the user by the identity manager (102):
- requesting (3), by the identity manager (102), the authentication of said user from the electronic communications device (100);
- the electronic communications device (100) is authenticated (4) for the identity manager (102).

3. A method according to any of the previous claims, **characterized in that** the parameters relating to the content and type of advertisement which are sent from the content provider (101) to the advertisement adaptation service (104) are at least one of the following:
- the format in which the advertisement is to be received;
- the nature of the content in which the advertisement will be inserted;
- instructions to be applied to choose the advertisement.

4. A method according to any of the previous claims, **characterized in that** communication between the content provider (101) and the advertisement adaptation service (104) is carried out through a communication interface (103).

5. A method according to any of the previous claims, **characterized in that** when a user identifier is sent (5) by the identity manager (102) to the content provider (101), the address of the advertisement adaptation service (104) is attached.

6. A method according to any of claims 1 to 4, **characterized in that** when a user identifier is sent (5) by the identity manager (102) to the content provider (101), the address of a service discovery service in which the content provider (101) can find the address of the advertisement adaptation service (104) is attached.

7. A method according to any of the previous claims, **characterized in that** when the at least one selected advertisement and the associated metadata are sent by the advertisement adaptation service (104) to the content provider (101), a register which is stored in a database is generated.

8. A method for providing personalized advertisements to users of electronic communications devices (100), with access to a content provider (101), when the user accesses (1) said provider (101) to request a content, comprising the following step:
- initial authentication of the user, carried out by an identity manager (102);
- sending a user access request to said content provider (101) to request a content, which request includes user identity information provided by the identity manager (102);
- requesting, by the content provider (101), at least one advertisement from an advertisement adaptation service (104), sending with said request the user identifier and parameters relating to the content and type of advertisement requested;
- requesting (8), by the advertisement adaptation service (104), from the identity manager (102) a translation of the user identifier to a new identifier which can be used in a user profils database (105) in which the user profiles are stored;
- sending (9), by the identity manager (102), the new user identifier to the advertisement adaptation service (104);
- requesting (10), by the advertisement adaptation service (104) and using the new identifier, the user profile from the user profile database (105);
- sending (11), by the user profile database (105), said user profile to the advertisement adaptation service (104);
- consulting (12), by the advertisement adaptation service (104), an advertisement database (106) to determine the advertisement that is most suitable for the user profile and for the parameters relating to the content and type of advertisement requested by the content provider (101), requesting from said database (106) the at least one selected advertisement;
- sending (13), by the advertisement database (106), the at least one selected advertisement and optionally metadata associated to said advertisement to the advertisement adaptation service (104);
- sending, by the advertisement adaptation service (104), the at least one selected advertisement and the metadata associated thereto, if any, to the content provider (101);
- inserting (16), by the content provider (101), the selected advertisement in the content requested by the user and according to the indications included in the metadata, if any.

9. A method according to claim 8, **characterized in that** the following steps are carried out for the authentication of the user by the identity manager (102):
- requesting (3), by the identity manager (102), the authentication of said user from the electronic communications device (100);
- the electronic communications device (100) is authenticated (4) for the identity manager (102).

10. A method according to any of claims 8 to 9, **characterized in that** the parameters relating to the content and type of advertisement which are sent from the content provider (101) to the advertisement adaptation service (104) are at least one of the following:
- the format in which the advertisement is to be received;
- the nature of the content in which the advertisement will be inserted;
- instructions to be applied to choose the advertisement.

11. A method according to any of claims 8 to 10, **characterized in that** the communication between the content provider (101) and the advertisement adaptation service (104) is carried out through a communication interface (103).

12. A method according to any of claims 8 to 11, **characterized in that** when a user identifier is sent by the identity manager (102) to the content provider (101), the address of the advertisement adaptation service (104) is attached.

13. A method according to any of claims 8 to 11, **characterized in that** when a user identifier is sent by the identity manager (102) to the content provider (101), the address of a service discovery service in which the content provider (101) can find the address of the advertisement adaptation service (104) is attached.

14. A method according to any of claims 8 to 13, **characterized in that** when the at least one selected advertisement and the associated metadata are sent by the advertisement adaptation service (104) to the content provider (101), a register which is stored in a database is generated.

15. A system for providing personalized advertisements to users of electronic communications devices (100), with access to a content provider (101), when the user accesses (1) said provider (101) to request a content, said system comprising:
- an identity manager (102) which, based on a user authentication request (2) of the content provider (101), authenticates said user and sends (5) a user identifier to said content provider (101);
- an advertisement adaptation service (104) capable of:
- receiving a request from the content provider (101) to obtain at least one advertisement that is suitable for the user profile and for parameters relating to the content and type of advertisement requested, the advertisement adaptation service (104) returning the at least one selected advertisement to said content provider (101); and
- requesting (8) from the identity manager (102) a conversion of the user identifier to a new identifier suitable for being used in a user profile database (105);
- a user profile database (105) in which the user profiles of the system are stored and which is accessed (10) by the advertisement adaptation service (104) to obtain said profile using a new identifier;
- an advertisement database (106), including therein the user profiles which said advertisements are aimed at and other metadata associated to said advertisements, which database is accessed (12) by the advertisement adaptation service (104) to obtain the advertisement.

16. A system according to claim 15, **characterized in that** it additionally comprises a communication interface (103) through which the communication between the content provider (101) and the advertisement adaptation service (104) is carried out.

17. A system according to claims 15 to 16, **characterized in that** it additionally has a database in which the registers generated in each advertisement request by each content provider (101) are stored.

## Patentansprüche

1. Verfahren zum Bereitstellen von personalisierten Werbeanzeigen für Benutzer von elektronischen Kommunikationsgeräten (100) mit Zugang zu einem Inhaltsanbieter (101), wenn der Benutzer zum Anfordern von Inhalt auf den genannten Anbieter (101) zugreift (1), das die folgenden Schritte beinhaltet:
- Anfordern (2) der Identifikation und Authentifikation des genannten Benutzers von einem Identitätsmanager (102) durch den Inhaltsanbieter (101);
- Authentifizieren des Benutzers, ausgeführt durch den Identitätsmanager (102);
- Senden (5) einer Benutzerkennung zum Inhaltsanbieter (101) durch den Identitätsmanager (102);
- Anfordern, durch den Inhaltsanbieter (101), von wenigstens einer Werbeanzeige von einem Werbungsadaptionsdienst (104), Senden der Benutzerkennung und von Parametern in Bezug auf Inhalt und Typ der angeforderten Werbeanzeige mit der genannten Anforderung;
- Anfordern (8) vom Identitätsmanager (102), durch den Werbungsadaptionsdienst (104), einer Umsetzung der Benutzerkennung in eine neue Kennung, die in einer Benutzerprofildatenbank (105) verwendet werden kann, in der die Benutzerprofile gespeichert sind;
- Senden (9) der neuen Benutzerkennung zu dem Werbungsadaptionsdienst (104) durch den Identitätsmanager (102);
- Anfordern (10), durch den Werbungsadaptionsdienst (104) und mittels der neuen Kennung, des neuen Profils aus der Benutzerprofildatenbank (105);
- Senden (11) des genannten Benutzerprofils zu dem Werbungsadaptionsdienst (104) durch die Benutzerprofildatenbank (105);
- Konsultieren (12), durch den Werbungsadaptionsdienst (104), einer Werbeanzeigendatenbank (106) zum Bestimmen der Werbeanzeige, die für das Benutzerprofil und für die Parameter in Bezug auf Inhalt und Typ der vom Inhaltsanbieter (101) angeforderten Werbeanzeige am geeignetsten ist, Anfordern der wenigstens einen selektierten Werbeanzeige aus der genannten Datenbank (106);
- Senden (13), durch die Werbeanzeigendatenbank (106), der wenigstens einen selektierten Werbeanzeige und bei Bedarf Metadaten in Verbindung mit der genannten Werbeanzeige zu dem Werbungsadaptionsdienst (104);
- Senden, durch den Werbungsadaptionsdienst (104), der wenigstens einen selektierten Werbeanzeige und ggf. der damit assoziierten Metadaten zu dem Inhaltsanbieter (101);
- Einfügen (16), durch den Inhaltsanbieter (101), der selektierten Werbeanzeige in den vom Benutzer angeforderten Inhalt und ggf. gemäß den in den Metadaten enthaltenen Indikationen.

2. Verfahren nach Anspruch 1, **dadurch gekennzeichnet, dass** die folgenden Schritte zum Authentifizieren des Benutzers durch den Identitätsmanager (102) ausgeführt werden:
- Anfordern (3), durch den Identitätsmanager (102), der Authentifikation des genannten Benutzers von dem elektronischen Kommunikationsgerät (100);
- das elektronische Kommunikationsgerät (100) wird für den Identitätsmanager (102) authentifiziert.

3. Verfahren nach einem der vorherigen Ansprüche, **dadurch gekennzeichnet, dass** die vom Inhaltsanbieter (101) zum Werbungsadaptionsdienst (104) gesendeten Parameter in Bezug auf Inhalt und Typ der Werbeanzeige wenigstens einer der folgenden sind:
- das Format, in dem die Werbeanzeige empfangen werden soll;
- die Natur des Inhalts, in den die Werbeanzeige eingefügt wird;
- Anweisungen, die bei der Auswahl der Werbeanzeige einzuhalten sind.

4. Verfahren nach einem der vorherigen Ansprüche, **dadurch gekennzeichnet, dass** Kommunikationen zwischen dem Inhaltsanbieter (101) und dem Werbungsadaptionsdienst (104) über eine Kommunikationsschnittstelle (103) erfolgen.

5. Verfahren nach einem der vorherigen Ansprüche, **dadurch gekennzeichnet, dass**, wenn eine Benutzerkennung (5) vom Identitätsmanager (102) zum Inhaltsanbieter (101) gesendet wird, die Adresse des Werbungsadaptionsdienstes (104) angehängt wird.

6. Verfahren nach einem der Ansprüche 1 bis 4, **dadurch gekennzeichnet, dass**, wenn eine Benutzerkennung (5) vom Identitätsmanager (102) zum Inhaltsanbieter (101) gesendet wird, die Adresse eines Diensteentdeckungsdienstes, in dem der Inhaltsanbieter (101) die Adresse des Werbungsadaptionsdienstes (104) finden kann, angehängt ist.

7. Verfahren nach einem der vorherigen Ansprüche, **dadurch gekennzeichnet, dass**, wenn die wenigstens eine selektierte Werbeanzeige und die assoziierten Metadaten vom Werbungsadaptionsdienst (104) zum Inhaltsanbieter (101) gesendet werden, ein Register erzeugt wird, das in einer Datenbank gespeichert wird.

8. Verfahren zum Bereitstellen von personalisierten Werbeanzeigen für Benutzer von elektronischen Kommunikationsgeräten (100) mit Zugang zu einem Inhaltsanbieter (101), wenn der Benutzer zum Anfordern von Inhalt auf den genannten Anbieter (101) zugreift (1), das die folgenden Schritte beinhaltet:
- anfängliche Authentifizierung des Benutzers, ausgeführt durch einen Identitätsmanager (102);
- Senden einer Benutzerzugangsanforderung zu dem genannten Inhaltsanbieter (101) zum Anfordern eines Inhalts, wobei die Anforderung Benutzeridentitätsinformationen enthält, die vom Identitätsmanager (102) bereitgestellt werden;
- Anfordern, durch den Inhaltsanbieter (101), von wenigstens einer Werbeanzeige von einem Werbungsadaptionsdienst (104), Senden der Benutzerkennung und von Parametern in Bezug auf Inhalt und Typ der angeforderten Werbeanzeige mit der genannten Anforderung;
- Anfordern (8), vom Identitätsmanager (102) durch den Werbungsadaptionsdienst (104), einer Umsetzung der Benutzerkennung in eine neue Kennung, die in einer Benutzerprofildatenbank (105) verwendet werden kann, in der die Benutzerprofile gespeichert sind;
- Senden (9), durch den Identitätsmanager (102), der neuen Benutzerkennung zum Werbungsadaptionsdienst (104);
- Anfordern (10), durch den Werbungsadaptionsdienst (104) und mittels der neuen Kennung, des Benutzerprofils aus der Benutzerprofildatenbank (105);
- Senden (11) des genannten Benutzerprofils zum Werbungsadaptionsdienst (104) durch die Benutzerprofildatenbank (105);
- Konsultieren (12), durch den Werbungsadaptionsdienst (104), einer Werbeanzeigendatenbank (106) zum Feststellen der Werbeanzeige, die für das Benutzerprofil und für die Parameter in Bezug auf Inhalt und Typ der vom Inhaltsanbieter (101) angeforderten Werbeanzeige am besten geeignet ist, Anfordern der wenigstens einen selektierten Werbeanzeige aus der genannten Datenbank (106);
- Senden (13), durch die Werbeanzeigendatenbank (106), der wenigstens einen selektierten Werbeanzeige und bei Bedarf von Metadaten in Verbindung mit der genannten Werbeanzeige zum Werbungsadaptionsdienst (104);
- Senden, durch den Werbungsadaptionsdienst (104), der wenigstens einen selektierten Werbeanzeige und ggf. der damit assoziierten Metadaten zum Inhaltsanbieter (101);
- Einfügen (16), durch den Inhaltsanbieter (101), der selektierten Werbeanzeige in den vom Benutzer angeforderten Inhalt und ggf. gemäß den in den Metadaten enthaltenen Indikationen.

9. Verfahren nach Anspruch 8, **dadurch gekennzeichnet, dass** die folgenden Schritte zum Authentifizieren des Benutzers durch den Identitätsmanager (102) ausgeführt werden:
- Anfordern (3), durch den Identitätsmanager (102), der Authentifikation des genannten Benutzers von dem elektronischen Kommunikationsgerät (100);
- das elektronische Kommunikationsgerät (100) wird für den Identitätsmanager (102) authentifiziert (4).

10. Verfahren nach Anspruch 8 oder 9, **dadurch gekennzeichnet, dass** die vom Inhaltsanbieter (101) zum Werbungsadaptionsdienst (104) gesendeten Parameter in Verbindung mit Inhalt und Typ einer Werbeanzeige wenigstens einer der folgenden sind:
- das Format, in dem die Werbeanzeige empfangen werden soll;
- die Natur des Inhalts, in den die Werbeanzeige eingefügt wird;
- Anweisungen, die bei der Auswahl der Werbeanzeige einzuhalten sind.

11. Verfahren nach einem der Ansprüche 8 bis 10, **dadurch gekennzeichnet, dass** die Kommunikationen zwischen dem Inhaltsanbieter (101) und dem Werbungsadaptionsdienst (104) über eine Kommunikationsschnittstelle (103) erfolgen.

12. Verfahren nach einem der Ansprüche 8 bis 11, **dadurch gekennzeichnet, dass**, wenn eine Benutzerkennung vom Identitätsmanager (102) zum Inhaltsanbieter (101) gesendet wird, die Adresse des Werbungsadaptionsdienstes (104) angehängt ist.

13. Verfahren nach einem der Ansprüche 8 bis 11, **dadurch gekennzeichnet, dass**, wenn eine Benutzerkennung vom Identitätsmanager (102) zum Inhaltsanbieter (101) gesendet wird, die Adresse eines Diensteentdeckungsdienstes, in dem der Inhaltsanbieter (101) die Adresse des Werbungsadaptionsdienstes (104) finden kann, angehängt ist.

14. Verfahren nach einem der Ansprüche 8 bis 13, **dadurch gekennzeichnet, dass**, wenn die wenigstens eine selektierte Werbeanzeige und die assoziierten Metadaten vom Werbungsadaptionsdienst (104) zum Inhaltsanbieter (101) gesendet werden, ein Register erzeugt wird, das in einer Datenbank gespeichert wird.

15. System zum Bereitstellen von personalisierten Werbeanzeigen für Benutzer von elektronischen Kommunikationsgeräten (100) mit Zugang zu einem Inhaltsanbieter (101), wenn der Benutzer zum Anfordern eines Inhalts auf den genannten Anbieter (101) zugreift (1), wobei das genannte System Folgendes umfasst:
- einen Identitätsmanager (102), der auf der Basis einer Benutzerauthentifikationsanforderung (2) durch den Inhaltsanbieter (101) den genannten Benutzer authentifiziert und eine Benutzerkennung zu dem genannten Inhaltsanbieter (101) sendet (5);
- ein Werbungsadaptionssystem (104) mit den folgenden Fähigkeiten:
- Empfangen einer Anforderung vom Inhaltsanbieter (101) für wenigstens eine Werbeanzeige, die für das Benutzerprofil und für Parameter in Bezug auf Inhalt und Typ der angeforderten Werbeanzeige geeignet ist, wobei das Werbungsadaptionssystem (104) die wenigstens eine selektierte Werbeanzeige zu dem genannten Inhaltsanbieter (101) zurücksendet; und
- Anfordern (8), von dem Identitätsmanager (102), einer Konvertierung der Benutzerkennung in eine neue Kennung, die für die Verwendung in einer Benutzerprofildatenbank (105) geeignet ist;
- eine Benutzerprofildatenbank (105), in der die Benutzerprofile des Systems gespeichert sind und auf die das Werbungsadaptionssystem (104) zum Erhalten des genannten Profils mittels einer neuen Kennung zugreifen kann (110);
- eine Werbeanzeigendatenbank (106), in der die Benutzerprofile enthalten sind, auf die die genannten Werbeanzeigen gerichtet sind, sowie andere Metadaten in Verbindung mit den genannten Werbeanzeigen, wobei das Werbungsadaptionssystem (104) zum Einholen der Werbeanzeige auf diese Datenbank zugreift (12).

16. System nach Anspruch 15, **dadurch gekennzeichnet, dass** es zusätzlich eine Kommunikationsschnittstelle (103) umfasst, über die die Kommunikationen zwischen dem Inhaltsanbieter (101) und dem Werbungsadaptionsdienst (104) erfolgen.

17. System nach Anspruch 15 oder 16, **dadurch gekennzeichnet, dass** es zusätzlich eine Datenbank hat, in der die in jeder Werbeanzeigenanforderung von jedem Inhaltsanbieter (101) erzeugten Register gespeichert werden.

## Revendications

1. Procédé pour fournir des publicités personnalisées à des utilisateurs de dispositifs de communications électroniques (100), avec accès à un fournisseur de contenu (101), lorsque l'utilisateur accède (1) audit fournisseur (101) afin de demander un contenu, comprenant les étapes suivantes :
- le fournisseur de contenu (101) demande (2) l'identification et l'authentification dudit utilisateur auprès d'un gestionnaire d'identités (102) ;
- l'authentification de l'utilisateur, effectuée par le gestionnaire d'identités (102) ;
- le gestionnaire d'identités (102) envoie (5) un identifiant Utilisateur au fournisseur de contenu (101) ;
- le fournisseur de contenu (101) demande au moins une publicité auprès d'un service d'adaptation de publicités (104), envoie avec ladite demande l'identifiant Utilisateur et les paramètres relatifs au contenu et au type de publicité demandée ;
- le service d'adaptation de publicités (104) demande (8) au gestionnaire d'identités (102) une traduction de l'identifiant Utilisateur en un nouvel identifiant lequel peut être utilisé dans une base de données (105) de profils Utilisateurs dans laquelle des profils d'utilisateur sont stockés ;
- le gestionnaire d'identités (102) envoie (9) le nouvel identifiant Utilisateur au service d'adaptation de publicités (104) ;
- le service d'adaptation de publicités (104) utilisant le nouvel identifiant demande (10) le profil Utilisateur auprès de la base de données (105) de profils Utilisateurs ;
- la base de données (105) de profils Utilisateurs envoie (11) ledit profil Utilisateur au service d'adaptation de publicités (104) ;
- le service d'adaptation de publicités (104) consulte (12) une base de données (106) de publicités afin de déterminer la publicité qui convient le mieux au profil Utilisateur et aux paramètres relatifs au contenu et au type de publicité demandée par le fournisseur de contenu (101), demande ladite au moins une publicité sélectionnée auprès de ladite base de données (106) ;
- la base de données (106) de publicités envoie (13) ladite au moins une publicité sélectionnée et, facultativement des métadonnées associées à ladite publicité, au service d'adaptation de publicités (104) ;
- le service d'adaptation de publicités (104) envoie ladite au moins une publicité sélectionnée, et les métadonnées qui y sont associées, le cas échéant, au fournisseur de contenu (101) ;
- le fournisseur de contenu (101) insère (16) la publicité sélectionnée dans le contenu demandé par l'utilisateur et en fonction des indications incluses dans les métadonnées, le cas échéant.

2. Procédé selon la revendication 1, **caractérisé en ce que** le gestionnaire d'identités (102) effectue les étapes suivantes pour l'authentification de l'utilisateur :
- le gestionnaire d'identités (102) demande (3) l'authentification dudit utilisateur auprès du dispositif de communications électroniques (100) ;
- le dispositif de communications électroniques (100) est authentifié (4) pour le gestionnaire d'identités (102).

3. Procédé selon l'une quelconque des revendications précédentes, **caractérisé en ce que** les paramètres relatifs au contenu et au type de publicité, qui sont envoyés à partir du fournisseur de contenu (101) vers le service d'adaptation de publicités (104), sont au moins l'un des éléments suivants :
- le format dans lequel la publicité est destinée à être reçue ;
- la nature du contenu dans lequel la publicité est destinée à être insérée ;
- les instructions à appliquer pour choisir la publicité.

4. Procédé selon l'une quelconque des revendications précédentes, **caractérisé en ce que** la communication entre le fournisseur de contenu (101) et le service d'adaptation de publicités (104) est assurée par l'intermédiaire d'une interface de communication (103).

5. Procédé selon l'une quelconque des revendications précédentes, **caractérisé en ce que** l'adresse du service d'adaptation de publicités (104) est attachée lorsqu'un identifiant Utilisateur est envoyé (5) par le gestionnaire d'identités (102) au fournisseur de contenu (101).

6. Procédé selon l'une quelconque des revendications 1 à 4, **caractérisé en ce que** l'adresse d'un service de découverte de services, dans lequel le fournisseur de contenu (101) peut trouver l'adresse du service d'adaptation de publicités (104), est attachée lorsqu'un identifiant Utilisateur est envoyé (5) par le gestionnaire d'identités (102) au fournisseur de contenu (101).

7. Procédé selon l'une quelconque des revendications précédentes, **caractérisé en ce qu'**un registre, lequel est stocké dans une base de données, est généré lorsque ladite au moins une publicité sélectionnée et les métadonnées associées sont envoyées par le service d'adaptation de publicités (104) au fournisseur de contenu (101).

8. Procédé pour fournir des publicités personnalisées à des utilisateurs de dispositifs de communications électroniques (100), avec accès à un fournisseur de contenu (101), lorsque l'utilisateur accède (1) audit fournisseur (101) afin de demander un contenu, comprenant les étapes suivantes :
- l'authentification initiale de l'utilisateur, effectuée par un gestionnaire d'identités (102) ;
- l'envoi d'une demande d'accès Utilisateur audit fournisseur de contenu (101) afin de demander un contenu, cette demande englobant des informations de l'identité de l'utilisateur fournies par le gestionnaire d'identités (102) ;
- le fournisseur de contenu (101) demande au moins une publicité auprès d'un service d'adaptation de publicités (104), envoie avec ladite demande l'identifiant Utilisateur et les paramètres relatifs au contenu et au type de publicité demandée ;
- le service d'adaptation de publicités (104) demande (8) au gestionnaire d'identités (102) une traduction de l'identifiant Utilisateur vers un nouvel identifiant lequel peut être utilisé dans une base de données (105) de profils Utilisateurs dans laquelle des profils d'utilisateur sont stockés ;
- le gestionnaire d'identités (102) envoie (9) le nouvel identifiant Utilisateur au service d'adaptation de publicités (104) ;
- le service d'adaptation de publicités (104) utilisant le nouvel identifiant demande (10) le profil Utilisateur auprès de la base de données (105) de profils Utilisateurs ;
- la base de données (105) de profils Utilisateurs envoie (11) ledit profil Utilisateur au service d'adaptation de publicités (104) ;
- le service d'adaptation de publicités (104) consulte (12) une base de données (106) de publicités afin de déterminer la publicité qui convient le mieux au profil Utilisateur et aux paramètres relatifs au contenu et au type de publicité demandée par le fournisseur de contenu (101), demande ladite au moins une publicité sélectionnée auprès de ladite base de données (106) ;
- la base de données (106) de publicités envoie (13) ladite au moins une publicité sélectionnée et, facultativement des métadonnées associées à ladite publicité, au service d'adaptation de publicités (104) ;
- le service d'adaptation de publicités (104) envoie ladite au moins une publicité sélectionnée, et les métadonnées qui y sont associées, le cas échéant, au fournisseur de contenu (101) ;
- le fournisseur de contenu (101) insère (16) la publicité sélectionnée dans le contenu demandé par l'utilisateur et en fonction des indications incluses dans les métadonnées, le cas échéant.

9. Procédé selon la revendication 8, **caractérisé en ce que** le gestionnaire d'identités (102) effectue les étapes suivantes pour l'authentification de l'utilisateur :
- le gestionnaire d'identités (102) demande (3) l'authentification dudit utilisateur auprès du dispositif de communications électroniques (100) ;
- le dispositif de communications électroniques (100) est authentifié (4) pour le gestionnaire d'identités (102).

10. Procédé selon l'une quelconque des revendications 8 à 9, **caractérisé en ce que** les paramètres relatifs au contenu et au type de publicité, qui sont envoyés à partir du fournisseur de contenu (101) vers le service d'adaptation de publicités (104), sont au moins l'un des éléments suivants :
- le format dans lequel la publicité est destinée à être reçue ;
- la nature du contenu dans lequel la publicité est destinée à être insérée ;
- les instructions à appliquer pour choisir la publicité.

11. Procédé selon l'une quelconque des revendications 8 à 10, **caractérisé en ce que** la communication entre le fournisseur de contenu (101) et le service d'adaptation de publicités (104) est assurée par l'intermédiaire d'une interface de communication (103).

12. Procédé selon l'une quelconque des revendications 8 à 11, **caractérisé en ce que** l'adresse du service d'adaptation de publicités (104) est attachée lorsqu'un identifiant Utilisateur est envoyé par le gestionnaire d'identités (102) au fournisseur de contenu (101).

13. Procédé selon l'une quelconque des revendications 8 à 11, **caractérisé en ce que** l'adresse d'un service de découverte de services, dans lequel le fournisseur de contenu (101) peut trouver l'adresse du service d'adaptation de publicités (104), est attachée lorsqu'un identifiant Utilisateur est envoyé par le gestionnaire d'identités (102) au fournisseur de contenu (101).

14. Procédé selon l'une quelconque des revendications 8 à 13, **caractérisé en ce qu'**un registre, lequel est stocké dans une base de données, est généré lorsque ladite au moins une publicité sélectionnée et les métadonnées associées sont envoyées par le service d'adaptation de publicités (104) au fournisseur de contenu (101).

15. Système pour fournir des publicités personnalisées à des utilisateurs de dispositifs de communications électroniques (100), avec accès à un fournisseur de contenu (101), lorsque l'utilisateur accède (1) audit fournisseur (101) afin de demander un contenu, ledit système comprenant :
- un gestionnaire d'identités (102) qui, sur la base d'une demande (2) d'authentification Utilisateur émanant du fournisseur de contenu (101), authentifie ledit utilisateur et envoie (5) un identifiant Utilisateur audit fournisseur de contenu (101);
- un service d'adaptation de publicités (104) capable de :
- recevoir une demande provenant du fournisseur de contenu (101) afin d'obtenir au moins une publicité qui convienne au profil Utilisateur et aux paramètres relatifs au contenu et au type de publicité demandée, le service d'adaptation de publicités (104) renvoyant ladite au moins une publicité sélectionnée audit fournisseur de contenu (101) ; et
- demander (8) au gestionnaire d'identités (102) une conversion de l'identifiant Utilisateur en un nouvel identifiant convenant à une utilisation dans une base de données (105) de profils Utilisateurs ;
- une base de données (105) de profils Utilisateurs dans laquelle les profils d'utilisateurs du système sont stockés et à laquelle accède (10) le service d'adaptation de publicités (104) afin d'obtenir ledit profil en utilisant un nouvel identifiant ;
- une base de données (106) de publicités, laquelle inclut les profils Utilisateurs qui sont ciblés par lesdites publicités, et d'autres métadonnées associées auxdites publicités, le service d'adaptation de publicités (104) accédant (12) à cette base de données afin d'obtenir la publicité.

16. Système selon la revendication 15, **caractérisé en ce qu'**il comporte à titre additionnel une interface de communication (103) grâce à laquelle la communication entre le fournisseur de contenu (101) et le service d'adaptation de publicités (104) est assurée.

17. Système selon les revendications 15 à 16, **caractérisé en ce qu'**il comporte à titre additionnel une base de données dans laquelle sont stockés les registres ayant été générés lors de chaque demande de publicité faite par chaque fournisseur de contenu (101).
